# EUROPÄISCHE PATENTANMELDUNG

(11) **EP 2 587 280 A2**
(43) Veröffentlichungstag der Anmeldung: **01.05.2013**
(21) Anmeldenummer: 12185363.4
(22) Anmeldetag: 21.09.2012
(51) Int. Cl.: G01V 8/10

(54) **Ausrichthilfe für einen Sensor**

(30) Priorität: 26.10.2011 DE 102011054806
(71) Anmelder: Leuze electronic GmbH + Co KG, 73277 Owen/Teck (DE)
(72) Erfinder: Hubert, Jörg, 85244 Röhrmoos (DE)
(74) Vertreter: Ruckh, Rainer Gerhard

(57) **Zusammenfassung**

Die erfindungsgemäße Ausrichthilfe dient für einen Sensorsignale generierenden Sensor und umfasst wenigstens einen Beschleunigungssensor (8), dessen Ausgangssignale in einer Auswerteeinheit (7) als Maß für die Güte der Ausrichtung des Sensors bezüglich einer Solllage verarbeitet werden.

## Beschreibung

Die Erfindung betrifft eine Ausrichthilfe für einen Sensor.

Sensoren der in Rede stehenden Art können insbesondere als optische Sensoren ausgebildet sein, die zur Erfassung von Objekten in einem Überwachungsbereich eingesetzt werden. Generell weisen derartige optische Sensoren wenigstens einen Sender auf, der Lichtstrahlen in den Überwachungsbereich aussendet. Weiterhin ist wenigstens ein Empfänger zum Empfang der aus dem Überwachungsbereich kommenden Lichtstrahlen vorgesehen.

Die Sensorkomponenten des Sensors können dabei in einem Gehäuse angeordnet sein. Ein Beispiel hierfür sind Distanzsensoren, die insbesondere als Laserscanner ausgebildet sein können. Die von einem Sender emittierten Lichtstrahlen werden dabei in einem Raumbereich periodisch abgelenkt, so dass durch die mit dem Laserscanner durchgeführten Distanzmessungen die Positionen von Objekten innerhalb des Raumbereichs erfasst werden können.

Die Sensorkomponenten des Sensors können dabei auch in zwei oder mehreren Gehäusen angeordnet sein. Ein Beispiel für einen derartigen Sensor ist ein nach dem Lichtschrankenprinzip arbeitender Lichtvorhang. Diese weist eine Sendereinheit mit einem ersten Gehäuse auf, in welchem Lichtstrahlen emittierende Sender vorgesehen sind. Zudem ist eine in einem zweiten Gehäuse integrierte Empfängereinheit mit einer Anordnung von Empfängern vorgesehen.

Vor Inbetriebnahme derartiger Sensoren müssen diese justiert werden. Zur Justage müssen das oder die Gehäuse des Sensors in einer vorgegebenen Solllage an einem Gegenstand angeordnet sein, der stationär oder mobil ist. Bei einem mehrere Gehäuse umfassenden Sensor müssen die Gehäuse zudem relativ zueinander justiert werden.

Bei optischen Sensoren emittieren deren Sender typischerweise Lichtstrahlen im Infrarotbereich, so dass diese für das menschliche Auge nicht sichtbar sind. Daher können diese Lichtstrahlen nicht zur Justage, das heißt Ausrichtung der Sensoren verwendet werden.

Aus diesem Grund müssen zur Justage der Sensoren Ausrichthilfen in Form von externen, zusätzlichen Einheiten eingesetzt werden. Derartige Ausrichthilfen weisen typischerweise einen Ausrichtlaser auf, der einen sichtbaren Laserstrahl emittiert, anhand dessen die Ausrichtung vorgenommen werden kann.

Derartige Ausrichthilfen erfordern einen hohen konstruktiven Aufwand und sind zudem kostenaufwändig. Ein weiterer Nachteil besteht darin, dass die Laserstrahlen des Ausrichtlasers eine Gefährdung für das menschliche Auge darstellen.

Der Erfindung liegt die Aufgabe zugrunde, eine Ausrichthilfe bereitzustellen, mittels derer mit geringem Aufwand eine sichere und zuverlässige Ausrichtung von Sensoren ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Ausrichthilfe dient für einen Sensorsignale generierenden Sensor und umfasst wenigstens einen Beschleunigungssensor, dessen Ausgangssignale in einer Auswerteeinheit als Maß für die Güte der Ausrichtung des Sensors bezüglich einer Solllage verarbeitet werden.

Mit dem Beschleunigungssensor kann unter Ausnutzung der Schwerkraft hochgenau die räumliche Ausrichtung des Sensors bestimmt werden, wodurch eine entsprechend genaue Justage des Sensors ermöglicht wird. Ein wesentlicher Vorteil besteht darin, dass die Ausrichthilfe durch den Einsatz des Beschleunigungssensors einen robusten, kostengünstigen Aufbau aufweist, mit dem die Ausrichtung des Sensors unempfindlich gegen Störeinflüsse durchgeführt werden kann.

Weiter ist vorteilhaft, dass der Beschleunigungssensor ein Element bildet, von welchem keinerlei Gefahren ausgehen. Insbesondere gehen von diesem keine Gefahren für das menschliche Auge aus, wie es bei herkömmlichen Ausrichthilfen in Form von Ausrichtlasern der Fall ist.

Vorteilhaft weist diese wenigstens einen zwei- oder dreiachsigen Beschleunigungssensor auf, mittels dessen die Neigung des Sensors in zwei oder drei Raumrichtungen bestimmbar ist.

Damit kann mittels des Beschleunigungssensors die Ausrichtung des Sensors in mehreren Raumrichtungen kontrolliert werden.

Zweckmäßig wird dabei mittels des Beschleunigungssensors als Maß für die Güte der Ausrichtung des Sensors dessen Neigung bezüglich einer horizontalen und/oder vertikalen Solllage ermittelt.

Besonders vorteilhaft ist die gesamte Ausrichthilfe im Sensor selbst integriert. Der Beschleunigungssensor als wesentlicher Bestandteil der Ausrichthilfe kann dabei ohne großen Fertigungsaufwand im Sensor, insbesondere in einem Gehäuse des Sensors, eingebaut werden. Insbesondere ist vorteilhaft, dass für den Abgleich des Beschleunigungssensors nur die Erfassung eines Istzustands erforderlich ist, so dass der Abgleich vollautomatisch durchgeführt werden kann. Weiterhin ist vorteilhaft, dass für den Abgleich kein manuelles Eingreifen erforderlich ist, so dass die Fertigungszeit für die Integration im Sensor äußerst gering gehalten werden kann.

Die Auswerteeinheit als weiterer Bestandteil der Ausrichthilfe ist vorzugsweise von der Auswerteeinheit des Sensors selbst gebildet, das heißt die Auswerteeinheit wird nicht nur für die Sensorfunktion genutzt sondern zugleich für die Ausrichthilfe, wodurch ein besonders kostengünstiger Aufbau realisiert wird.

Zur Erhöhung der Messgenauigkeit des Beschleunigungssensors weist diese dem Sicherheitssensor zugeordnete Mittel zur Temperaturkompensation auf.

Vorteilhaft ist als weiterer Bestandteil der Ausrichthilfe eine Anzeigeeinheit vorgesehen, mittels derer die aktuelle Ausrichtung des Sensors visualisiert wird.

Die Anzeige der aktuellen Ausrichtung kann in graphischer Form erfolgen oder auch als numerische Werte. Je nach Art der Anzeige ist die Anzeigeeinheit entsprechend ausgebildet.

Besonders vorteilhaft ist die Anzeigeeinheit so ausgebildet, dass diese, z. B. bei einer Überkopfmontage des Sensors automatisch ausgerichtet wird.

Der Sensor, der die Ausrichthilfe enthält kann generell als Sicherheitssensor ausgebildet sein, das heißt der Sensor weist einen Aufbau auf, mit dem die sicherheitstechnischen Anforderungen zum Einsatz im Personenschutz erfüllt sind. Hierzu kann der Sensor beispielsweise eine redundante Auswerteeinheit in Form zweier sich zyklisch überwachender Rechnereinheiten aufweisen, mittels derer eine Fehlerkontrolle aller Sensorkomponenten durchgeführt wird.

Der Sensor ist bevorzugt als optischer Sensor ausgebildet.

Gemäß einer ersten Ausführungsform kann der Sensor als Lichtvorhang ausgebildet sein. Dieser wird typischerweise zur Gefahrenbereichsüberwachung an stationären Maschinen und Anlagen eingesetzt.

Der Lichtvorhang weist eine in einem ersten Gehäuse integrierte Sendereinheit mit einer Anzahl von Lichtstrahlen emittierenden Sendern und eine in einem zweiten Gehäuse integrierte Empfängereinheit mit einer Anzahl von Lichtstrahlen empfangenden Empfängern auf. In einem der Gehäuse oder in beiden Gehäusen ist jeweils ein Beschleunigungssensor integriert.

Gemäß einer weiteren Ausführungsform kann der optische Sensor als Laserscanner ausgebildet sein. Mit diesem können innerhalb eines Raumbereichs Personen und Objekte geortet werden. Derartige Laserscanner können beispielsweise an Fahrzeugen wie einem fahrerlosen Transportsystem angeordnet sein, um für eine Kollisionsüberwachung Objekte im Raumbereich vor dem fahrerlosen Transportsystem zu erfassen.

Gemäß einer besonders vorteilhaften Ausgestaltung der Erfindung bilden die Ausgangssignale des wenigstens einen Beschleunigungssensors zusätzlich zu den Sensorsignalen des Sensors weitere Sensorsignale.

Damit bilden die Sensorsignale des Beschleunigungssensors und des Sensors redundante Signale.

Somit wird mit den Signalen des Beschleunigungssensors nicht nur die Ausrichtung des Sensors ermöglicht. Vielmehr erhält der Beschleunigungssensor auch die Detektionssicherheit des Sensors, da der Beschleunigungssensor neben dem Sensor einen zweiten Messkanal zur Generierung von Sensorsignalen bildet.

Der Erfindung wird im Folgenden anhand der Zeichnungen erläutert. Es zeigen:
- Figur 1:: Als Lichtvorhang ausgebildeter Sensor mit einer integrierten Ausrichthilfe.
- Figur 2:: Als Laserscanner ausgebildeter Sensor mit integrierter Ausrichthilfe, montiert an der Fronseite eines fahrerlosen Transportsystems.
- Figur 3:: Schematische Darstellung der Komponenten des Laserscanners.

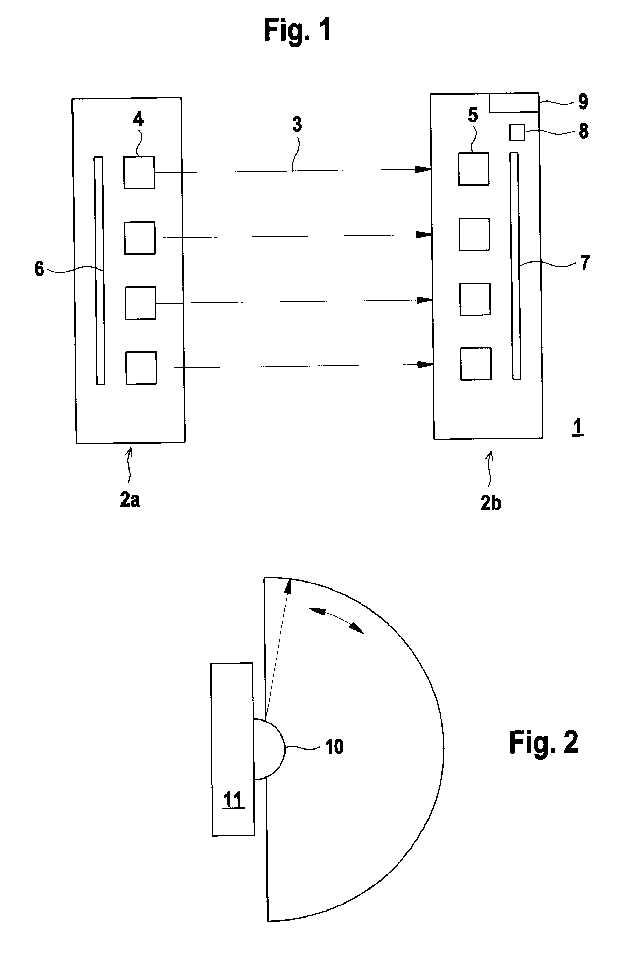

Figur 1 zeigt schematisch den Aufbau eines Lichtvorhangs 1 als erstes Ausführungsbeispiels des erfindungsgemäßen Sensors. Der Lichtvorhang 1 weist eine Sendereinheit auf, die in einem ersten Gehäuse 2a integriert ist sowie eine Empfängereinheit, die in einem zweiten Gehäuse 2b integriert ist.

Die Sendereinheit weist eine Anzahl von Lichtstrahlen 3 emittierenden Sendern 4 auf, die von Leuchtdioden oder dergleichen gebildet sind. Die Empfängereinheit weist eine hierzu entsprechende Anzahl von Lichtstrahlen 3 empfangenden Empfängern 5 auf, die jeweils von Photodioden gebildet sind. Die Sender 4 werden von einer Steuereinheit 6 gesteuert.

Der Empfangseinheit ist eine Auswerteeinheit 7 in Form einer Prozessoranordnung vorgesehen, die die Empfangssignale an den Ausgängen der Empfänger 5 auswertet. Zudem übernimmt die Auswerteeinheit 7 die Steuerung der Empfänger 5.

Der Lichtvorhang 1 dient zur Erfassung von Objekten in einem Überwachungsbereich. Die Sendereinheit und die Empfängereinheit werden an gegenüberliegenden Rändern des Überwachungsbereichs so angeordnet, dass bei freiem Überwachungsbereich die Lichtstrahlen 3 jeweils eines Senders 4 auf einen zugeordneten Empfänger 5 treffen. Tritt ein Objekt in den Überwachungsbereich ein, so wird wenigstens einer der Lichtstrahlen 3 unterbrochen, was in der Auswerteeinheit 7 registriert wird.

Die Auswerteeinheit 7 generiert in Abhängigkeit der Empfangssignale der Empfänger 5 ein binäres Schaltsignal, dessen Schaltzustände angeben, ob sich ein Objekt im Überwachungsbereich befindet oder nicht.

Der Bereich des Lichtvorhangs 1 erfolgt derart, dass die einzelnen Sender-Empfängerpaare zyklisch nacheinander aktiviert werden, wobei die Synchronisation der Aktivierung der Sender 4 und Empfänger 5 in bekannter Weise optisch anhand der Lichtstrahlen 3 des Lichtvorhangs 1 erfolgt.

Der Lichtvorhang 1 bildet im vorliegenden Fall einen Sicherheitssensor, der zur Gefahrenbereichsüberwachung, insbesondere im Bereich des Personenschutzes eingesetzt wird. Hierzu weist der Lichtvorhang 1 einen fehlersicheren Aufbau auf. Dies wird dadurch erreicht, dass die Auswerteeinheit 7 einen redundanten Aufbau aufweist, beispielsweise in Form zweier sich zyklisch gegenseitig überwachender Prozessoren.

Vor der Inbetriebnahme des Lichtvorhangs 1 werden die Sender- und Empfängereinheit an einer zu überwachenden Anlage oder Maschine aufgestellt und so justiert, dass die Längsachsen der Gehäuse 2a, 2b wie in Figur 1 dargestellt senkrecht ausgerichtet sind und so relativ zueinander orientiert sind, dass die Lichtstrahlen 3 der Sender 4 auf die zugeordneten Empfänger 5 treffen.

Zur Durchführung der Justage ist im Gehäuse 2b der Empfängereinheit eine Ausrichthilfe integriert. Generell kann eine entsprechende Ausrichthilfe auch im Gehäuse 2a, 2b der Sendereinheit integriert sein, die von der Steuereinheit 6 ausgesteuert wird.

Die Ausrichthilfe umfasst einen Beschleunigungssensor 8, der im vorliegenden Fall als dreiachsiger Beschleunigungssensor 8 ausgebildet ist, mit dem die Neigung des Gehäuses 2b in allen drei Raumrichtungen bestimmt werden kann. Weiterhin umfasst die Ausrichthilfe eine Anzeigeeinheit 9, mit der die Güte der Ausrichtung des Gehäuses 2b visualisiert werden kann.

Als weitere Komponente der Ausrichthilfe kann eine nicht dargestellte Vorrichtung zur Temperaturkompensation des Beschleunigungssensors 8 vorgesehen sein, die vorzugsweise einen Temperatursensor umfasst. Alle Komponenten der Ausrichthilfe sind an die Auswerteeinheit 7 angeschlossen. Die im Beschleunigungssensor 8 generierten Ausgangssignale werden in der Auswerteeinheit 7 ausgewertet. In der Auswerteeinheit 7 wird dabei die aktuelle Neigung des Gehäuses 2b relativ zu seiner vertikalen Solllage ermittelt. Diese Neigung wird an der Anzeigeeinheit 9 in Zahlenform oder graphisch dargestellt, so dass eine Bedienperson die Ausrichtung des Gehäuses 2b verändern kann, bis die Solllage erreicht ist.

Im einfachsten Fall wird das Gehäuse 2a der Sendereinheit in einer definierten Solllage aufgestellt und dann das Gehäuse 2b der Empfängereinheit relativ zum Gehäuse 2a der Sendereinheit justiert. In diesem Fall ist eine Ausrichthilfe in der Empfängereinheit ausreichend. Allgemein kann eine der Ausrichthilfe der Empfängereinheit entsprechende Ausrichthilfe in der Sendereinheit angeordnet sein, so dass auch diese separat justierbar ist. Weiterhin kann auch allein in der Sendereinheit eine Ausrichthilfe vorgesehen sein.

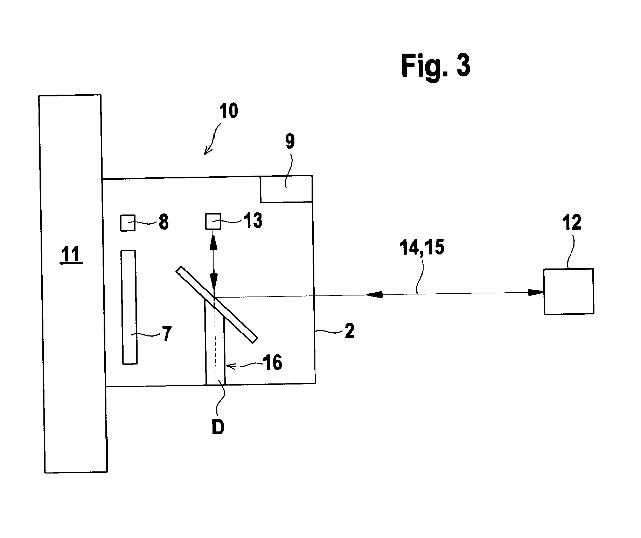

Die Figuren 2 und 3 zeigen schematisch einen optischen Sensor in Form eines Laserscanners 10 an der Frontseite eines fahrerlosen Transportsystems 11. Mit dem Laserscanner 10 wird eine Kollisionsüberwachung durchgeführt, indem in einem Raumbereich vor dem fahrerlosen Transportsystem 11 eindringende Hindernisse 12 geortet werden.

Wie Figur 3 zeigt, sind die Sensorkomponenten des Laserscanners 10 in einem Gehäuse 2 integriert. Der Laserscanner 10 weist einen Distanzsensor 13 mit einem Sendelichtstrahlen 14 emittierenden Sendelement und einem Empfangslichtstrahlen 15 empfangenden Empfangselement auf.

Zur Erfassung von Hindernissen 12 in einem Raumbereich werden die Sendelichtstrahlen 14 des Senders 4 periodisch innerhalb dieses Raumbereichs geführt. Hierzu kann der Distanzsensor 13 selbst beweglich, insbesondere drehbar gelagert sein. Im vorliegenden Fall ist der Distanzsensor 13 stationär angeordnet. Die Sendelichtstrahlen 14 werden dann über eine Ablenkeinheit 16, bestehend aus einem motorisch betriebenen, um eine Drehachse D drehbaren Ablenkspiegel, abgelenkt und überstreichen somit, wie in Figur 2 veranschaulicht, eines in einer horizontalen Ebene liegende Halbkreisfläche. Die von einem Hindernis 12 reflektierten Empfangslichtstrahlen 15 werden koaxial zu den Sendelichtstrahlen 14 über den Ablenkspiegel verlaufend zum Distanzsensor 13 zugeführt. Die aktuelle Ablenkposition der Sendelichtstrahlen 14 wird durch einen Winkelgeber erfasst.

Die Auswertung der im Distanzsensor 13 generierten Distanzmesswerte und der aktuellen Ablenkpositionen der Ablenkeinheit 16 erfolgt in der Auswerteeinheit 7, die bei einer Ausbildung des Laserscanners 10 als Sicherheitssensoren wie die Auswerteeinheit 7 des Lichtvorhangs 1 gemäß Figur 1 einen redundanten Aufbau aufweist.

Mit dem so abgebildeten Laserscanner 10 können innerhalb des Raumbereichs Hindernisse 12 geortet werden, das heißt deren Positionen bestimmt werden. Durch eine zeitaufgelöste Erfassung von Hindernissen 12 oder stationären Gegenständen wie Wänden, Maschinen, Anlagen und dergleichen können auch die Geschwindigkeiten und die Beschleunigungen des fahrerlosen Transportsystems 11, insbesondere bei Bremsvorgängen und Kurvenfahrten, bestimmt werden.

Der Laserscanner 10 weist analog zur Ausführungsform gemäß Figur 1 eine Ausrichthilfe mit einem Beschleunigungssensor 8, einer diesem zugeordneten Vorrichtung zur Temperaturkompensation sowie eine Auswerteeinheit 7 auf. Mittels der Ausrichthilfe kann der Laserscanner 10 so justiert werden, dass dieser in einer exakt vertikalen Solllage am fahrerlosen Transportsystem 11 montiert ist. Die Ausrichtung erfolgt analog zum Ausführungsbeispiel gemäß Figur 1.

Im vorliegenden Ausführungsbeispiel weist der Beschleunigungssensor 8 eine erweiterte Funktionalität auf. Die Ausgangssignale des Beschleunigungssensors 8 werden nicht nur zur Justage des Laserscanners 10 verwendet, sondern zusätzlich auch als Sensorsignale. Der Beschleunigungssensor 8 bildet somit neben dem Distanzsensor 13 einen zweiten Messkanal. Durch die beiden unabhängigen Messkanäle werden redundante Sensorsignale generiert, die die Detektionssicherheit des Laserscanners 10 erhöhen. Spezifisch bilden die Beschleunigungssignale des Beschleunigungssensors 8 redundante Sensorsignale zu den mit dem Distanzsensor 13 bestimmten Beschleunigungen.

### Bezugszeichenliste

- (1): Lichtvorhang
- (2a): erstes Gehäuse
- (2b): zweites Gehäuse
- (3): Lichtstrahlen
- (4): Sender
- (5): Empfänger
- (6): Steuereinheit
- (7): Auswerteeinheit
- (8): Beschleunigungssensor
- (9): Anzeigeeinheit
- (10): Laserscanner
- (11): fahrerloses Transportsystem
- (12): Hindernis
- (13): Distanzsensor
- (14): Sendelichtstrahlen
- (15): Empfangslichtstrahlen
- (16): Ablenkeinheit

## Patentansprüche

1. Ausrichthilfe für einen Sensorsignale generierenden Sensor, umfassend wenigstens einen Beschleunigungssensor (8), dessen Ausgangssignale in einer Auswerteeinheit (7) als Maß für die Güte der Ausrichtung des Sensors bezüglich einer Solllage verarbeitet werden.

2. Ausrichthilfe nach Anspruch 1, **dadurch gekennzeichnet, dass** diese wenigstens einen zwei- oder dreiachsigen Beschleunigungssensor (8) auf weist, mittels dessen die Neigung des Sensors in zwei oder drei Raumrichtungen bestimmbar ist.

3. Ausrichtung nach Anspruch 2, **dadurch gekennzeichnet, dass** mittels des Beschleunigungssensors (8) als Maß für die Güte der Ausrichtung des Sensors dessen Neigung bezüglich einer horizontalen und/oder vertikalen Solllage ermittelt wird.

4. Ausrichthilfe nach einem der Ansprüche 1 bis 3, **dadurch gekennzeichnet, dass** diese eine Anzeigeeinheit (9) aufweist, mittels derer die aktuelle Ausrichtung des Sensors visualisiert ist.

5. Ausrichthilfe nach einem der Ansprüche 1 bis 4, **dadurch gekennzeichnet, dass** diese im Sensor integriert ist.

6. Ausrichthilfe nach einem der Ansprüche 1 bis 5, **dadurch gekennzeichnet, dass** die Auswerteeinheit (7) Bestandteil des Sensors ist.

7. Ausrichthilfe nach einem der Ansprüche 1 bis 6, **dadurch gekennzeichnet, dass** diese dem Sicherheitssensor zugeordnete Mittel zur Temperaturkompensation aufweist.

8. Ausrichthilfe nach einem der Ansprüche 1 bis 7, **dadurch gekennzeichnet, dass** der Sensor ein Sicherheitssensor ist.

9. Ausrichthilfe nach einem der Ansprüche 1 bis 8, **dadurch gekennzeichnet, dass** der Sensor ein optischer Sensor ist.

10. Ausrichthilfe nach Anspruch 9, **dadurch gekennzeichnet, dass** der Sensor ein Lichtvorhang (1) ist, wobei der Lichtvorhang (1) eine in einem ersten Gehäuse (2a) integrierte Sendereinheit mit einer Anzahl von Lichtstrahlen (3) emittierenden Sendern (4) und eine in einem zweiten Gehäuse (2b) integrierte Empfängereinheit mit einer Anzahl von Lichtstrahlen (3) empfangenden Empfängern (5) aufweist, und dass in einem der Gehäuse (2a, 2b) oder in beiden Gehäusen (2a, 2b) jeweils ein Beschleunigungssensor (8) ist.

11. Ausrichthilfe nach Anspruch 9, **dadurch gekennzeichnet, dass** der Sensor ein Laserscanner (10) ist.

12. Ausrichthilfe nach einem der Ansprüche 1 bis 11, **dadurch gekennzeichnet, dass** die Ausgangssignale des wenigstens einen Beschleunigungssensors (8) zusätzlich zu den Sensorsignalen des Sensors weitere Sensorsignale bilden.

13. Ausrichthilfe nach Anspruch 12, **dadurch gekennzeichnet, dass** die Sensorsignale des Beschleunigungssensors (8) und des Sensors redundante Signale bilden.

14. Ausrichthilfe nach einem der Ansprüche 12 oder 13, **dadurch gekennzeichnet, dass** die Sensorsignale des Sensors und des Beschleunigungssensors (8) Beschleunigungssignale sind.

15. Ausrichthilfe nach Anspruch 14, **dadurch gekennzeichnet, dass** mit einem als Laserscanner (10) ausgebildeten Sensor Distanzen von Objekten bestimmt werden, wobei aus der zeitaufgelösten Bestimmung von Distanzmesswerten Beschleunigungen des Sensors ermittelt werden.
